# EUROPEAN PATENT APPLICATION

(11) **EP 4 764 616 A1**
(43) Date of publication of application: **24.06.2026**
(21) Application number: 24220908.8
(22) Date of filing: 18.12.2024
(51) Int. Cl.: G01V 3/165, G01C 21/20, G05D 1/244, G06T 7/73, G06T 19/00, G01S 13/88

(54) **MOBILE NON-DESTRUCTIVE TESTING SCANNER WITH SLAM**

(71) Applicant: Hexagon Innovation Hub GmbH, 9435 Heerbrugg (CH)
(72) Inventor: VAN DER ZWAN, Elmar Vincent, 9428 Walzenhausen (CH); KANEIDER, Wilfried, 6830 Rankweil-Brederis (AT); GARCIA FERNANDEZ, Nicolas, 9000 St. Gallen (CH); ZIEGLER, Thomas, 8032 Zürich (CH); GLÄNTZ, Holger, 9403 Goldach (CH)
(74) Representative: Kaminski Harmann

(57) **Abstract**

A method for non-destructive testing (NDT) scanning and such an NDT-scanner (1) for detecting and measuring of a sub-surface structure (22) of an environment, in particular a ground penetrating radar (GPR) and/or inductive and/or capacitive scanner. The method comprises tracking a scanning position during the scanning for sub-surface structures (22) based on an evaluation of a stream or sequence of images of the environment captured by an imaging sensor (17, 17a-c) of the NDT-scanner (1) using a Simultaneous Localization And Mapping (SLAM) algorithm. Based on the tracked position, there is an automatic computing and outputting of a position related trigger signal (36) for triggering the measurement of the sub-surface structure (22) and/or of a position related user guiding information (19a, b).

## Description

The present invention relates to a mobile non-destructive testing scanner (NDT-scanner) and to a corresponding non-destructive scanning method according to pre-characterizing portion of the independent claims.

Such non-destructive testing (NDT) scanners play a significant role in detecting and diagnosing sub-surface structures, for example in environments such as construction sites or renovation works or property/facility examination with scanning for embedded structures such as cables, pipes, voids, ducts, cavities, conduits or reinforcing bars (rebars).

In particular, detection and characterization of embedded structures in surrounding media such as concrete components, brick, plaster etc. is critical for quality control during the construction phase (as-built monitoring), as well as for example for examination of unknown structures, e.g. to avoid hitting embedded sub-surface elements when drilling, or health monitoring in form of recurrent examination and post-disaster safety evaluation, e.g. of tunnels or bridges. Thereby, the parameters of sub-surface structures that need to be measured include in particular their location or 2D-position and depth (cover thickness or overlay) as well as diameter.

Such NDT-detectors usually work by measuring the change of a chosen parameter as a sensing head is swept across a surface of interest such as a concrete wall or floor while emitting a sensor signal towards the surface which enters the embedding material, for instance within a scanning depth or measuring range up to one meter. Through the sweeping or scanning movement of the mobile detector, for example in a hand-held or hand-driven manner by a user, it is possible through the use of the received response signals to determine the position and the length or direction of the hidden object. By scanning a complete area of interest, a full image of a sub-surface structure can be accomplished. The scanning result can for example be shown in a graphical manner to the user on a display arranged at the housing of the scanner or sent to a remote display device such as a so-called smartphone or tablet.

One example of NDT-technology is electromagnetic-based detection, using an eddy current sensor. A typical eddy current sensor comprises magnetic coils which excite time-varying magnetic fields towards the surface and receive the induced secondary magnetic fields from conductive sub-surface objects. Known eddy current systems apply one or several harmonic voltages to a coil to generate a time-varying magnetic field within the metallic test-piece. This magnetic field induces eddy currents in nearby electrical conductors, which weakens the source magnetic field. This weakening of the source magnetic field results in a measurable voltage signal in a nearby pickup coil, which contains information about the electrical, magnetic, and geometrical properties of the test-piece. In case of measurement of magnetizable buried objects, in particular metallic objects, the induced secondary magnetic fields are sensitive to both the object's diameter and depth. Such electro-magnetic sensor technology is for example disclosed by the US 5339023 A, US 4837509 A, US 6541965 B1 or US 5446379.

An important benefit of electromagnetic systems is that they are generally relatively insensitive to the material properties of the embedding material such as concrete or stone itself and other non-metallic materials that may be present within the embedding material besides the metallic structure such as a cable, rebar or pipe to be detected and measured.

Another example of an NDT-scanner is a Ground Penetrating Radar (GPR) commonly used to detect underground assets noninvasively, i.e. without digging up the ground. GPRs use radar pulses to image the subsurface. The emitted radar pulses are reflected,refracted or scattered back to the surface when encountering a boundary between materials with different electrical properties, in particular permittivity (electric polarizability), wherein the returned radar pulses are analyzed for underground assets. Typical underground assets to be detected are pipes carrying gas, water or electricity. GPRs are effective for locating plastic conduits or concrete storm and sanitary sewers, for example, which cannot be effectively located using standard electromagnetic induction utility locating tools as such tools can identify only conductive materials. Within an environment to be scanned, GPRs are moved along trajectories / scan lines to identify underground assets lying underneath the trajectories. A GPR scanner is for example described in EP 2159605 A1 which relates to such an NDT-system which sends a high frequency (>10 MHz) electromagnetic wave at a sub-surface target, and records the time of flight in the material.

In any case, in order to generate an accurate and complete scan result, the test system has to determine the position of its scan probe relative to the material under test respectively within the environment or map the scanner's position within a higher-level map such as a floor plan or building model.

Many non-destructive scanning systems use mechanical means to track the movement of the scanner, for instance rotational encoders arranged at the wheel axes of the scanner. However, the rotary encoder measurements can be quite imprecise, ambiguous or lack robustness, particularly when scanning on rough or uneven surfaces which can lead to incoherent result, e.g. due to lack of sufficient surface contact or contact at all while moving.

Also, it is known in the art to place specific markers such as reflective track bars. For instance, the scanner then can determine its 2D-position with the defined area by laser distance measurements (EDM units) to the limiting bars attached to the surface. Other means for localization of the scanner known in the art are a scan grid paper visualizing e.g. a 1x1m scan grid with perpendicular scan lines or QR code markers on the surface to be scanned which delimit an area or region of interest and can be referenced/mapped by an external, referenced surveying device, for example by way of an image taken by a tablet. However, the need of additional, external hardware such as markers and the time and skill needed for its handling/arrangement are cumbersome, which is in particular disadvantageous with regard to recurrent examinations or extended environments, e.g., when having to set up and combine multiple scans within a building. In addition, the known localization and position tracking methods are prone to error, e.g. when misplacing the markers or inappropriately/incorrectly handling the scanner in relation thereto while scanning.

It is therefore an object of the present invention to improve a mobile NDT-scanner and NDT-method for detection and measuring of sub-surface structures.

It is a further object to provide a mobile NDT-scanner and method for improved localization of the scanner respectively NDT-measurements.

These objects are achieved by realizing the features of the independent claims. Features which further develop the invention in an alternative or advantageous manner are described in the dependent patent claims.

The present invention therefore relates to a mobile non-destructive testing (NDT) scanner for detecting and measuring of a sub-surface structure of a scan environment. The scanner is preferably embodied as a ground penetrating radar (GPR) and/or inductive and/or capacitive scanner.

The scanner comprises an NDT-sensor designed for sensing the sub-surface structure and generating NDT-sensor signals thereof, in particular a radar, an eddy current sensor or capacitive sensor. The scanner also has a control and evaluation unit configured for detection and measurement of the sub-surface structure by evaluation of the received NDT-sensor signals. All sensor components can be arranged in a housing designed to provide mobility of the scanner adjacent to the surface to be scanned, for example by wheels or simply by a flat bottom side.

The scanner additionally comprises at least one optical imaging sensor designed for capturing 2D- and/or 3D-images of at least part of the environment when scanning. The optical image sensor can be embodied for instance as a (2D-)camera, a time-of-flight camera and/or a LIDAR. Said control and evaluation unit is configured to track a position of the scanner during a scanning procedure based on an evaluation of 2D- and/or 3D-images, for example in form of a video stream or irregular sequence of images, of the environment captured by the imaging sensor using a Simultaneous Localization And Mapping (SLAM) algorithm.

Further, the control and evaluation unit of the scanner is configured to compute and output a position-related trigger signal for triggering the measurement based on the tracked position.

In addition or alternatively to such automatic generation of a position-related trigger signal, the control and evaluation unit is configured to compute a position-related user-guiding information based on the tracked position and output the user guiding information via a human-machine-interface (HMI) connected to the scanner's controller.

As an option in case of an automatic generation of a position-related user-guiding information, the control and evaluation unit is configured to establish a relation of the current tracked scanner position to a retrieved stored sub-surface structure position, in particular whereby the stored position is a position previously measured and stored in connection with the thereby tracked scanner position by the scanner, and to compute and output a navigation instruction guiding to the sub-surface structure position as said user guiding information.

Additionally or alternatively, for a control and evaluation unit configured for automatic generation of a position-related trigger signal, the control and evaluation unit is optionally further configured to compute and output said trigger signal in such a way that a further measurement of such a sub-surface structure is triggered when approaching it based on the stored sub-surface structure position and the tracked scanner position, based on the established positional relationship of the current tracked scanner position to the retrieved stored sub-surface structure position.

Additionally or alternatively, the control and evaluation unit is configured to track the position with regard to a scan pattern, in particular a regular scan grid, and to compute and output the trigger signal and/or the user guiding information in order to generate a defined scan pattern, in particular a regular/equidistant scan grid of preferably horizontal and vertical scan lines.

Thereby, the user guiding information can comprise at least one of a warning in case of a deviation from the defined scan pattern, a navigation instruction towards a starting point of a next scan point or line, or instructions for manually triggering a measurement based on the automatically computed trigger signal, if available. This can be done in combination for example in that the user is guided to a specific position and, when reaching the position, instructed to manually trigger the NDT_sensor and thus a measurement by the trigger signal which is outputted in form of a user instruction.

In still another embodiment, the control and evaluation unit is configured to track the position in relation to a map of the environment, in particular a stored or retrieved external/higher-level map such as a building model and/or floor plan and/or self-built map, whereby the control and evaluation unit is configured to store positions of said sub-surface structure measurements in relation to the map based on the tracked scanner position. The relation to the map can be given by optical markers deployed in the environment and captured in images of the imaging sensor as well as in surveys by a position referenced external surveying instrument such as a terrestrial laser scanner or total station.

In still another embodiment, the scanner comprises at least one of an inertial measurement unit (IMU), in particular a micro-mechanical inertial measurement unit (MEMS IMU), a magnetic compass, a GNSS unit or at least one magnetic, capacitive and/or optical odometer coupled to at least one wheel designed for surface contact of the scanner. Therein, the control and evaluation unit is configured to take measurements results of the IMU, magnetic compass, GNSS unit and/or odometers into account for said position tracking using SLAM algorithm, for example a visual-inertial odometry (VIO)-SLAM algorithm, in particular using sensor fusion, local bundle adjustment and/or global optimization algorithms.

In case of such an embodiment with wheels and odometer, the scanner comprises at least two, in particular four, independent odometers, in particular comprising magnetic, capacitive and/or optical rotary encoders, coupled to two independent scanner wheels and/or axes and the control and evaluation unit is configured to consider, disregard or weight measurements of each odometer for said position tracking independent of another.

Optionally, the sub-surface scanner comprises at least two imaging sensors designed and arranged in such a way as to provide overlapping or connected fields of view.

As another option, the control and evaluation unit is configured to track an orientation, in particular to track the full 6-DoF-pose, of the scanner during a scanning procedure based on an evaluation of images of the environment captured by the imaging sensor using a Simultaneous Localization And Mapping (SLAM) algorithm.

As another option, the control and evaluation unit is configured to compute and output the trigger signal and/or user guiding information in dependence on a monitored performance of the scanner (health status) and/or accuracy of the tracked scanner position, in particular to stop triggering and/or indicate a last position of (sufficiently) accurate measurement to the user. This can help to avoid and/or quickly replace compromised or inadequate measurements.

The invention also relates to a method for non-destructive testing (NDT) scanning for detecting and measuring of a sub-surface structure of an environment using an NDT-scanner, in particular a ground penetrating radar (GPR) and/or inductive and/or capacitive NDT-scanner.

The method comprises the steps of performing a scanning movement adjacent to the surface whilst sensing the sub-surface structure with a NDT-sensor of the NDT-scanner for generating NDT-sensor signals thereof, for example emitting NDT-sensor signals towards the surface by an NDT-sensor of the scanner and receiving NDT-sensor signals reflected by the sub-surface structure in course of the scanning movement adjacent to the surface, and detecting and measuring the sub-surface structure by automatic evaluation of the NDT-sensor signals.

The method also comprises a tracking a scanning position during the scanning based on an evaluation of 2D- or 3D-images of the environment captured by an imaging sensor of the NDT-scanner using a Simultaneous Localization And Mapping (SLAM) algorithm, and based on the tracked position, automatically computing and outputting a position related trigger signal for triggering the measurement of the sub-surface structure and/or position-related user-guiding information.

As an option, the method comprises the step of automatically registering individual, separate or single scans of the environment, generated by separate scanning procedures, based on position tracks of a respective scan mapped in a common map of the environment and/or based on feature extraction and matching of images of the imaging sensor respectively captured in course of the different scans. Thereby, the NDT-scans are scans of substantially the same location of the environment taken at different times and/or scans of different locations of the environment taken at substantially the same time, i.e. scans separate with respect to time and/or space.

The invention also relates to a computer program product, in particular for the control and evaluation unit of an NDT-scanner as claimed, having computer-executable instructions for performing the automatic execution of the steps of the method as claimed, in particular when run on the control and evaluation unit of an NDT-scanner as claimed.

The present invention with an NDT-scanner having an imaging sensor for imaging at least part of its overground/non-subsurface environment provides first the advantage of an NDT-scanning device able to send real-time feedback to a user. Such feedback is for instance such as to help the user to perform completely horizontal/vertical line scans and avoiding wrongly executed patterns.

Secondly, SLAM advantageously enables the registration of subsequent grid-scans to the same coordinate system (reference) without the necessity of additional hardware. Given that the goal of the NDT device is to locate, analyze and measure sub-surface objects, such functionality becomes decisive as it enables identification of previously registered objects or areas of interest and guide the user directly to them without the necessity to create a new map in every measurement. In this way, the device would be very suitable to easily monitor changes in sub-surface elements and/or leverage potentially critical areas, like e.g., areas to avoid drilling. SLAM enables the coarse localization of previously scanned objects in an area of interest and guide the user to them.

The proposed NDT-system performs simultaneous localization and mapping to solve a localization problem, without the need for external hardware (like e.g., measuring bars, markers or grid templates as needed in known NDT-systems). This eliminates the restriction of collecting the data within the specific area of interest delimited with the additional hardware.

Finally, SLAM technology can be used to resolve the positioning ambiguities characteristic of wheel-integrated devices, in which due to imperfections in the surfaces, some wheel encoders might be stimulated by wheels spinning in the air due to the momentum gained while in contact with the surface.

The self-localization ability of SLAM enables the device operation without the necessity to be in contact with the wall to stimulate the wheel encoders. In such cases, the full pose (position and orientation) of the device within the self-obtained map can be achieved through image-based Visual-Inertial Odometry (VIO).

Such a VIO-algorithm can be configured to provide a regular triggering signal for the scanner unit after a certain distance travelled, too. This feature is used to eliminate the dependency in the wheel-odometry to provide information about the device's movement and would open the possibility to remove the wheels from the design. The proposed solution requires a smaller number of power and resources to function properly.

Devices, systems, methods and setups according to the invention are described or explained in more detail below, purely by way of example, with reference to working examples shown schematically in the drawing. The diagrams of the figures should not be considered as being drawn to scale. Where appropriate, the same reference signs are used for the same features or for features with similar functionalities. Different indices to reference signs are used to differentiate between different embodiments of the same or an equivalent feature that is shown exemplary.

Specifically,
Figs. 1a-e show schematically an example of a generic NDT-mobile sub-surface scanning device and NDT-scanning method for detection of sub-surface structures, as in principle known in the art;
Figs. 2a,b show schematically such a mobile sub-surface scanner having cameras for providing a localization functionality and based thereon, improved NDT-capabilities;
Fig. 3 shows schematically a scanning process based on real-time position sensing of a mobile NDT-scanner within a measurement environment;
Fig. 4 illustrates a scheme of a self-location based scan procedure with generation of a trigger signal and scan trajectory measurement;
Fig. 5 shows a scheme of another self-location based scan procedure, with making use of additional positional sensor data;
Figs. 6a-f represent in a top view schematically a procedure of guiding an operator to a previously detected sub-surface structure, based on a tracked position of a scanner;
Fig. 7 schematically depicts another NDT-scan workflow to locate sub-surface objects based on a scanner self-localization, and subsequently measure and analyze data; and
Figs. 8a-c show another exemplary schematic workflow with an NDT-scanner making use of a scanner image based self-localization capability.

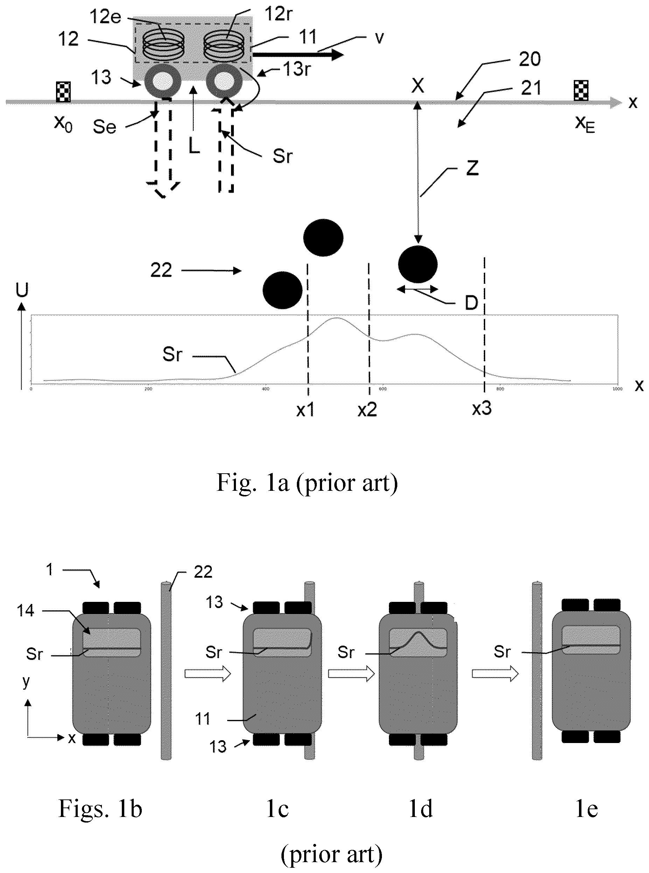

**Figs. 1a****-e** show schematically an example of a mobile scanning device 1 and method for detection of sub-surface structures or installations 22 of the type, as in principle known in the art. Such non-destructive testing (NDT) scanners 1 provide the possibility to assess and monitor sub-surface elements 22 without the necessity to make permanent modifications on the embedding structure 20, 21 to be analysed.

Figure 1a depicts on the top in a sectional view (x-z-plane) sub-surface structures 22, for example pipes, cables, lines or rebars, laid in different locations (position X and depth Z) into an embedding medium such as a concrete wall 21. In order to detect the structures 22, an eddy current sensor device 1 is swept with a defined velocity v over the surface 20 of the wall 21 which defines a displacement direction x, starting from a zero position X₀. Of course, just for sake of clarity of depiction, only the x-direction is shown, and the measurement can be done in y-direction, too. Also, multiple 1D scans/line scans can be combined to provide a 2D map of the measured structures 22.

The start position X₀ is indicated by a visual marker attached to the surface 20 before scanning. Likewise, a visual marker X_{E} indicates the end of the area to be scanned to a user which can be referenced (and therewith a measured position) to an external reference system respectively mapping to a higher-level map by measuring the markers X₀, X_{E} by an external instrument.

The detection of the embedded assemblies 22, in particular the measurement of location of a pipe, cable, line, rebar etc. 22, i.e. its X-position and depth Z, is in the example based on the principle of induction wherefore the sensor device 1 comprises an eddy current sensor 12, arranged at the scanner's housing 11. The eddy current sensor 12 comprises sensor coils 12e, 12r for emitting an electro-magnetic signal Se by emitting coil 12e with a certain penetration depth and receiving a response signal Sr with receiving coil 12r by a secondary magnetic field from magnetizable material such as steel 22. This measurement principle allows also to draw a conclusion about a corrosion condition of a metallic object 22.

Other active or passive principles for detecting and measuring a sub-surface structure are familiar to the skilled person, for instance a ground-penetrating radar (GPR) or surface penetrating radar (SPR) which couples high-frequency electromagnetic waves, as pulses or continuous wave, in the structure 21 and samples the backscattered echoes with regard to a time-of-flight (ToF), the echoes being caused by electrical parameter contrast in the ground, i.e. permittivity, permeability or conductivity. In particular a change in conductivity between embedding medium 21 and structure 22 primarily affects absorption of the radar signal by the respective medium. GPR allows to scan both for metallic and for non-metallic/non-magnetic or non-conductive buried structures which is also true for another known non-destructive testing (NDT) method, namely digital radiography (DR) which makes use of an X-ray beam which passes through the medium 21 and structures 22, which differently attenuates the radiation which then is detected by a detector on an opposite side. The different measurement methods can also be combined in one detection device 1.

As indicated in the lower half of figure 1a, the measurements of the voltage U of the sensor 12 is used to detect sub-surface structure position X and depth Z towards the scanning surface 20 of the detected part 22, whereby properties such as diameter D can be measured as indicated.

For determining a position X, in addition to the eddy current measurement in Volt, the displacement measured in scanning direction x from the starting position x₀ of the measurement device 1 is used as measurement variable.

The x-displacement is in the example determined by measuring the rotation using rotation sensors 13r on each wheel or axis 13 of the scanning device 1. Due to movement in scanning direction x, the wheels 13 are turned, which is measured through the respective rotational sensor 13r, for example in ticks. These ticks are translated in displacement e.g. in units of millimeters.

As indicated schematically in figure 1a, the eddy current sensor 12 is measuring a response Sr (as indicated in the graph) of magnetizable material in Volts according to an injected magnetic field Se at a certain frequency. In the figure, an example of a response signal Sr as the raw signal by electromagnetic induction due to the presence of the three embedded parts 22 is indicated with three more or less distinct signal peaks because of the relative dense or congested arrangement of the subsurface structures 22.

Figures 1b-e show in a top view a scheme of the scanning movement of the scanner 1 with detection of a sub-surface structure 22. In the example, the scanner 1 comprises a display 14 as an exemplary human-machine-interface (HMI) which allows a user to view the response signal Sr.

In the first position, indicated in figure 1b, the response signal Sr is zero as measuring device 1 has not yet approached the object 22 to be measured. In figure 1c, the scanner 1 reaches the object 22 such that a response signal Sr is generated and detected, which is indicated in the figure by the rising line at the right of display 14.

When passing the sub-surface object 22, as indicated in figure 1d, the response signal Sr shows a peak, then decreasing to zero again when having completely passed the structure 22, as indicated in figure 1e.

That is, a sub-surface structure 22 is only detected and measured when the scanner 1 respectively the sensor 12 has completely scanned it, which is also indicated in figure 1a by scanning position x1, x2 and x3. Not before having reached this scan positions x1-x3, a position of a respective sub-surface asset 22 is measured as for detection and measurement, a signal peak position has to be determined.

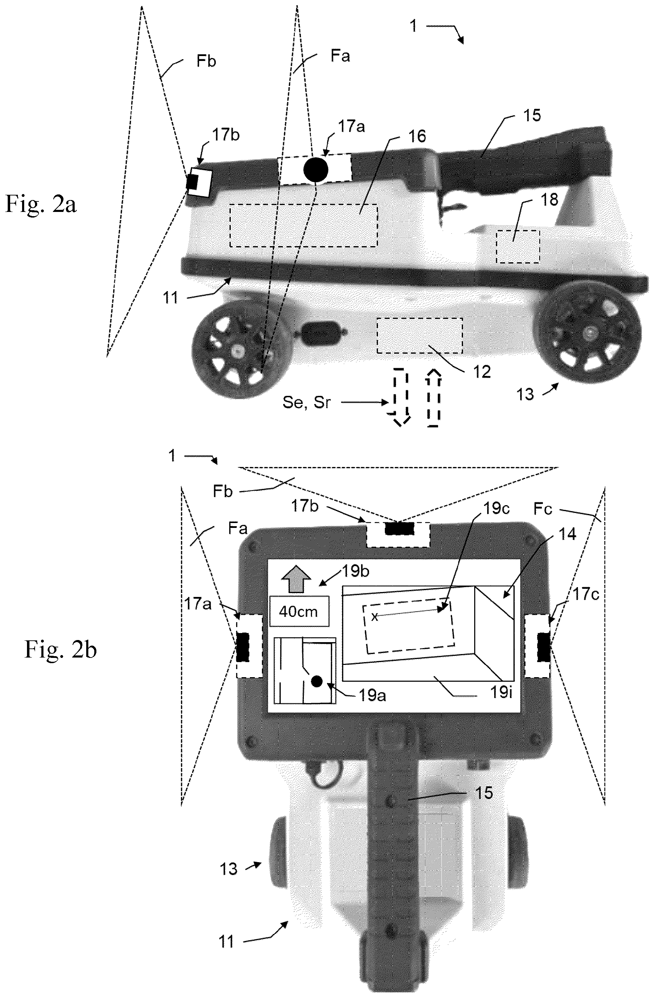

**Figs. 2a, 2b** show schematically a sub-surface scanner 1 having cameras 17a,b,c for providing a localization functionality and based thereon, improved NDT-capabilities. Figure 2a depicts a side view of the NDT-device 1 and figure 2b depicts a top view.

As shown, the scanner 1 comprises a housing 11 with a handle 15 and wheels 13 for hand-held sweeping of the scanner 1 adjacent to a surface of an environment to be scanned by sensor 12, emitting and receiving a sensor signal Se, Sr, as in principle described with regard to figures 1a-e above. However, in principle the sub-surface scanner 1 can be embodied without wheels 13 and/or can have a guiding rod, protruding from the housing 11 in addition to or instead of grip 15 for distant handling of the device 1, e.g. for convenient measurement of a ground. Also, the scanner 1 can be motorized/self-driven, in particular when embodied as a robotic measuring device for autonomous or semi-autonomous scanning of a terrain.

The scanner 1 comprises a computer 16 as schematically indicated in the figure which controls the device 1 and evaluates the sensor signal Sr for detecting and measuring sub-surface structures. In addition, the computer 16 is configured for determining and tracking a position of the NDT-scanner 1, evaluating environmental camera images by a SLAM algorithm.

A sequence of images of the scanning environment when moving the scanner 1 in the environment is provided by at least one camera of the scanner 1, in the example three cameras 17a,b,c, arranged in known orientation, at a defined geometric relationship at the housing 11, in particular with regard to the scanning sensor unit 12. The images can for example feature at least part of its overground surroundings which may include the surface the scanner 1 moves on.

As indicated in figures 2a,b, the cameras 17a-c are arranged at the housing 11 at different sides of the scanner 1, providing different field of views (FoV) 17a-c, for capturing different sections or regions of the environment, whereby the FoVs 17a-c can partly overlap. The cameras 17a-c allow to continuously image the surrounding of the scanner 1 in the field, in particular when measuring, but also in the run-up or in between different scans.

A camera 17a-c can be embodied as a digital monochrome or colour camera, e.g. with an imaging angle of about 50°, a wide-angle objective or a fish-eye lens. Instead or in addition to such 2D-imaging devices, the scanner 1 can comprise other means for optically imaging the environment such as a time-of-flight camera or a laser scanner/LIDAR (Light Detection And Ranging) for 3D-imaging of the surrounding.

Hence, images of the scanner's surrounding can be provided by the at least one image sensor 17a-c. The images are evaluated for tracking the current position and orientation of the at least one image sensor 17a-c during movement of the NDT-scanner 1 and hence also the current position and orientation of the NDT-scanner 1 by (visual) Simultaneous Localization and Mapping (VSLAM) techniques. VSLAM uses sequences of images taken at different times and locations from the one or more cameras 17a-c. The computer 16 can determine the location of the camera(s) 17a-c and thus of the scanner 1. Any data recorded by the scanner 1 may then be referenced to the true position of the scanner 1 at the time the data were recorded.

In general, the Visual SLAM process comprises the steps of tracking, mapping and global optimization and also relocalization. Tracking between consecutive camera images is utilized in order to generate a local camera trajectory as well as depth information. In most approaches, so called key frames are used as a base for tracking. Once tracking indicates that there is not enough overlap between the current camera frame and the key frame, a new key frame is created. Mapping is the process of generating a map out of the tracked sensor data. In some of the approaches, key frames including depth and scale information are stored in a graph with the edges representing the transformation between key frames. A Global Optimization step is needed for correcting the global map as tracking introduces a drift error into the map. The global optimization step relies on recognizing a place that has been seen and mapped before and therefore detecting a loop closure. Based on this detection, all camera poses can be optimized, whereby the 3D information can be jointly optimized. Relocalization is the procedure of placing the sensor 1 at an unknown pose in the map and trying to estimate the pose. This is usually done by comparing the current image data with the map.

SLAM can generate a map of reference points (features) in a 3D coordinate grid as it images them from different positions, in particular using features that are known to be stationary and hence valid reference points in 3D space, and thereby determines the camera position in that grid. For example, the mapping and self-location process can be implemented in a Kalman filter that estimates all variables.

Therein, features provided by way of image segmentation and object detection/feature extraction techniques may be used. Known exemplary SLAM-algorithms are MonoSLAM, PTAM (Parallel Tracking and Mapping) or ORB-SLAM algorithms, relying on descriptive image features like SIFT Scale-Invariant Feature Transform, SURF (Speeded Up Robust Feature) or ORB (Orientated FAST and Robust BRIEF) for tracking and depth estimation. As an alternative to feature based Visual SLAM, direct Visual SLAM algorithms are known such as DTAM (Dense Tracking and Mapping), LSD-SLAM (Large-Scale Semi Dense SLAM) or DSO (Direct Sparse Odometry), relying on a picture as a whole and using image pixels directly. The feature-based approach can have sparse feature maps as an output whereas the direct approach provides (semi-)dense point maps as output.

In addition to determination of the pose of scanner 1 by SLAM, further positional information of additional sensors 18 of the scanner 1 can be taken into account by computer 16, as detailed below in context of further figures. For example, the sensor 18 is embodied as an inertial sensor/inertial measurement unit (IMU) such as a micro-mechanical system (MEMS-IMU), magnetic compass and/or GNSS receiver. Also, rotations of wheels 13 of the scanner 1 can be considered as additional positional input data, measured by rotary encoders arranged at wheels/axes 13, in wheeled scanner embodiments, whereby preferably each wheel 13 is equipped with an encoder each and each wheel's odometry is measured and fed into the SLAM engine separately. Hence, the current position and orientation of the NDT-scanner 1 obtained using SLAM techniques may be fused with position and orientation information provided by other sources for evaluation by computer 16, for example relative revolution of the wheels 13 of the scanner 1 and/or GNSS data, thereby obtaining improved, more robust and accurate position and/or orientation information respectively localization and mapping of the scanner 1.

The current position and orientation of the scanner 1 in a pre-stored map of the environment may be obtained and outputted, as indicated in figure 2b by 2D-birds eye map 19a outputted on the scanner's display 14 as user guiding information. For example, initial GNSS data may be used to obtain position information about the scanner 1. Once the scanner 1 is moved, e.g. into a building or tunnel, position information may be obtained using SLAM, wherein SLAM may be used to update the initial position information provided by GNSS. Also, stored and mapped images of an environment can be retrieved, and the current location of the scanner 1 can be derived from a comparison of an actually captured image with the stored one. Thus, based on the localization/mapping of the scanner 1, the user of the scanner 1 can be informed about the current spatial position of the scanner 1 for user guidance.

As further indicated in figure 2b, based on the tracked position of the scanner 1 and a retrieved planned scan or measurement position, e.g. provided by a measurement schedule or building information model (BIM), user guidance in form of a navigational information 19b is indicated to the user, for example in form of a direction indicator (arrow), indicating in which direction the user/scanner 1 is to be moved, and distance specification ("40cm"), indicating a distance to be travelled.

Also, a live image 19i of the environment (here: part/edge of a room) captured by one or more of camera 17a-c is displayed, overlaid with graphical indication 19c of an area to be scanned (rectangle) respectively of a start point for scanning ("X") and a scan direction (arrow) as user guiding information.

Using augmented reality techniques, user guidance information can also be virtually displayed to a user of the scanner 1, wherefore also external display means such as a connected tablet or AR-wearables can be applied. Generally, the NDT-scanner 1 and an HMI such as a display can be separate units, connectable to another e.g. by wireless means, as part of an NDT-system. Information such as a next scanning trajectory along which the scanner 1 may be moved may also be displayed in physical form to the user, for example through a laser line projected onto the ground or wall through a laser projector serving as HMI and indicating the position of the next scanning trajectory. To keep the position of the projected laser line stable with respect to the moving device 1, the device's current position, obtained through the visual SLAM algorithm, may be used to adjust the direction in which the laser projector projects the laser line.

Additionally, augmented reality techniques may be used for displaying a roll-pitch-yaw representation of the scanner 1, including nominal position information. During movement of the scanner 1, the displaying of any positional information may be fixed by adapting displaying parameters to take into account movement of the device 1. For this purpose, current position and orientation information of the scanner 1 may be used.

In other words, the improved NDT-scanner 1 and NDT-scanning method with real-time localization of the device 1 and scan position in a higher-level map of the environment can provide real-time feedback to a user. Such feedback information comprises a warning to the user about deviations from pure horizontal and/or vertical scan lines, real-time guidance to the starting point of the next scan line, feedback once the end of the scan line is reached, real-time guidance to the user in effectively using the recorded NDT data such as guiding the user back to an identified below-surface object, real-time guidance to the user in effectively locating previously recorded sub-surface objects and/or real-time feedback to trigger the NDT-sensor 1, particularly to enable wheel-less and/or surface contact-less operation of the NDT device 1.

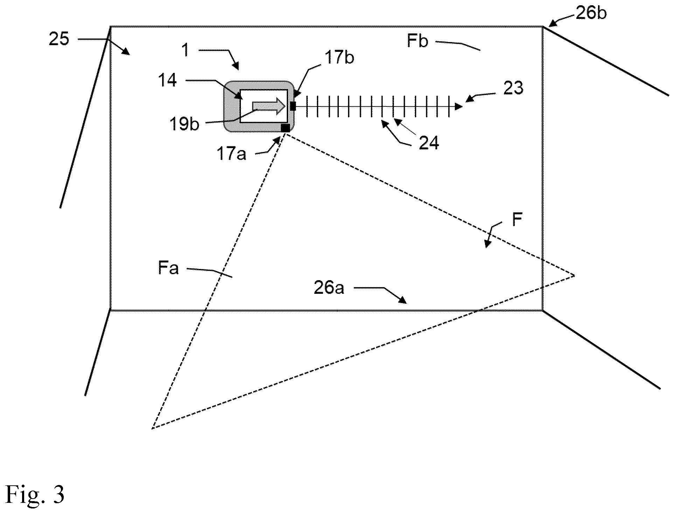

**Fig. 3** schematically shows a scanning process based on real-time position sensing of an NDT-scanner 1. The scanner 1 is placed in a scan environment 25, e.g. an indoor setting as shown, for detecting and measuring sub-surface structures. The scanner 1 comprises at least one camera, in the example two cameras 17a,b, arranged and aligned for sensing parts of the surrounding 25, with the first camera 17a having a first field of view Fa and the second camera having a different, second field of view Fb, which has an overlap F with the first field of view Fa. Preferably, the cameras 17a,b are tilted in such a way that they capture the area of the room 25 at the background from the user (overlap F), in which the relative movement of the features within the image streams is minimum. Aforesaid image-features are crucial to guarantee the robustness of the algorithm as they serve as some sort of anchors, especially with respect to sudden and rapid device rotations.

As already described above, based on evaluation of images of cameras 17a,b of the environment 25, for example by extraction and tracking of features such as edges 26a, 26b of room 25 in course of a VSLAM-process, an actual location of the scanner 1 is determined and tracked. A position of the scanner 1 can be determined with regard to all six Degrees of Freedom (DoF) or with regard to less DoFs. Also, only some DoFs can be determined by VSLAM whereas other DoFs can be determined based on other positional data of additional sensors of scanner 1, whereby also one or more DoFs can be determined redundantly both by VSLAM and by an additional sensor.

Based on the determined and mapped current location, user guiding information 19b can be shown on a scanner's display 14, as already described above. In the example, a guiding arrow 19b indicates a direction in which the scanner 1 is to be moved for measuring such that a scan trajectory 23 is obtained.

In addition to or as an alternative to use the self-localization capability of the scanner 1 for positional / navigational user guidance, the position tracking is used for automatic generation of a triggering signal as already briefly mentioned above. That is, the control unit of scanner 1 provides a position based, for example travelling-distance-based, triggering signal for the NDT unit, for example, generating NDT-sensor signals and/or evaluation of such signals at every 2cm of travel.

Hence, in particular a position-dependent trigger scheme can be automatically applied, resulting in regular, equidistant scan points 24 as indicated in the figure 3, independent of any changes or irregularities of scanner movement such as a slower sweep by a user at some parts of trajectory 23 compared to faster sweep at other trajectory sections. Also, any deviations from a straight sweep can be compensated or countered, for example in that the equidistance of measurement with regard to a distinct direction is maintained (in case of only slight deviation from that straight direction) and/or in that user guidance information is computed and indicated for repositioning or redirecting the scanner 1 back to the straight line 23.

If in advance positional information about a sub-surface structure is available, such as an as-planned position or previously measured as-is position, a measurement can also be triggered when approaching or reaching this pre-known or mapped position.

An automatically computed trigger signal can also be outputted to a user for manually triggering a measurement. For example, when the scanner 1 by sensor evaluation automatically determines that it has been positioned at a targeted position, the trigger signal is outputted as user guidance information that now, at the current scanner position, a measurement is to be initiated manually. Also, semi-automatic triggering approaches can be applied such as automatically triggering a measurement if the user manually holds still the scanner 1 at a defined position for a certain period of time (for example one or a couple of seconds), which the user is instructed to do by the control and evaluation unit of the scanner 1 via HMI 14.

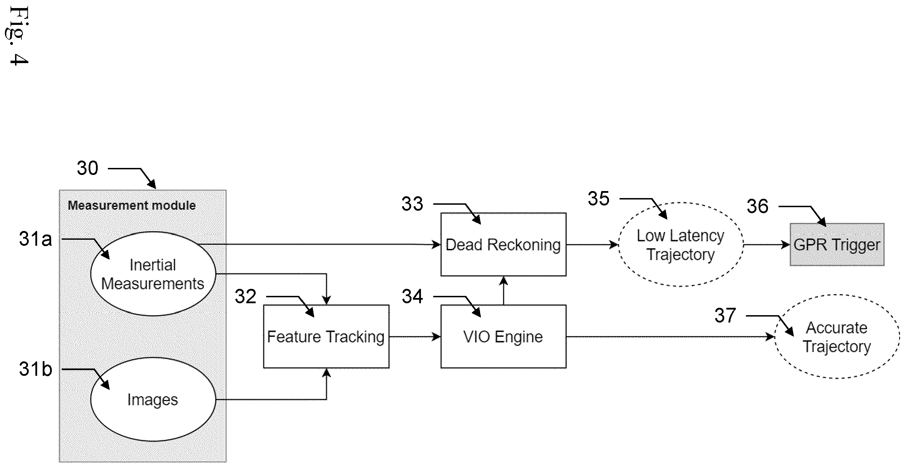

**Fig. 4** shows a scheme of a self-location based scan procedure with generation of a trigger signal and scan trajectory measurement.

In the example, the positional measurement module 30 of the scanning device, e.g. a GPR, is equipped with one or multiple optical imaging units such as cameras and in addition with an inertial measurement unit. Another example of an additional position sensor instead or in addition to an IMU could be a GNSS receiver which however is not feasible for occluded or indoor scans, in contrast to an IMU.

Here, a visual-inertial-odometry (VIO) SLAM algorithm of a VIO engine 34 processes input data obtained from the fusion of images 31b and inertial measurements 31a, using feature tracking 32. In this case, the VIO SLAM algorithm obtained from the fusion of images and inertial measurements provides a travelling-distance-based (regular) triggering signal 36 for the NDT unit from a low latency scan trajectory 35, for example, every 2cm of travel. In addition to computation of an accurate scan trajectory 37, a VIO correction could be sent to a real time pose provider (RTPP) and aid in a dead reckoning pose computation 33.

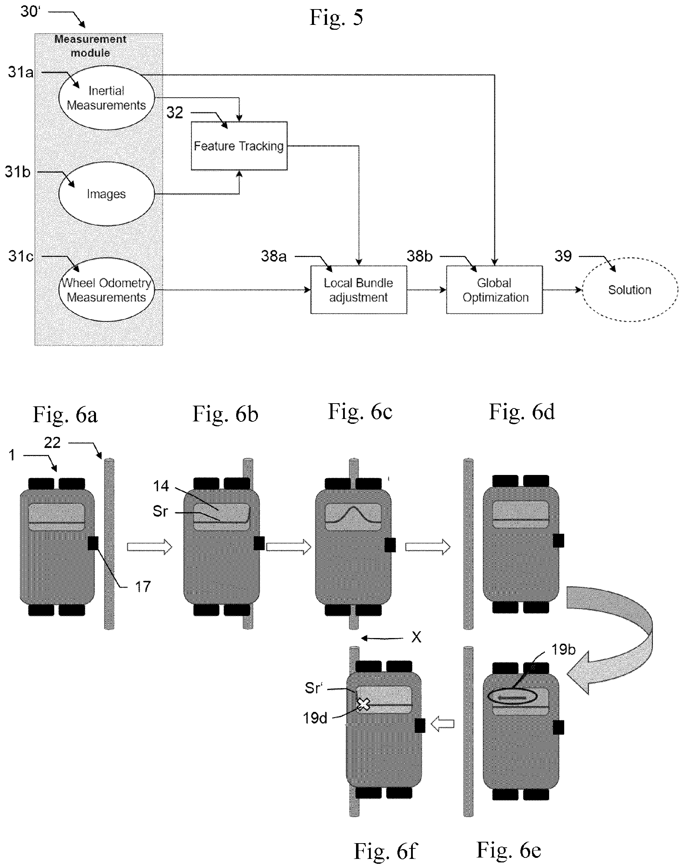

**Fig. 5** shows a scheme of another self-location based scan procedure, with making use of additional positional sensor data.

In this example, an NDT-scanner is embodied as a multi-sensor device equipped for example with two optical imaging units, e.g. two or more cameras, one inertial measurement unit, and four magnetic wheel encoders, to perform visual-inertial odometry with wheel odometry to perform SLAM. Hence, in addition to the previous example, in this version there is the not only an evaluation of IMU-measurements 31a together with environmental image data 31b but also incorporation of wheel encoders, and subsequently, the usage of wheel odometry measurements 31c within the current SLAM solution. Namely, the rotary measurements 31c are evaluated together with tracked features 32, whereby a local bundle adjustment 38a and global optimization 38b are applied for outputting the final solution 39 for the scanner pose. As it is computationally expensive, global optimization is preferably done not permanently but occasionally only, e.g. from time to time only or after some travelled distance.

This approach of using additional positional data 31c -in this case rotary encoder data- further increases performance of the SLAM solution when the device is moved in contact with the surface, even over rough surfaces. Thereby, a design with (four) individual magnetic encoders as already mentioned represents an advantage with respect to designs with full- and half axles rotary encoder design, since such single arrangement allows to maintain high performance regardless of the surface, and they are easy to exchange (in case of wear out) and leave more space in the measuring device for additional sensors.

**Figs. 6a****-f** represent in a top view schematically a procedure of guiding an operator to a previously detected sub-surface structure 22, based on the tracked position of a scanner 1, having at least one camera or other imaging sensor 17 for position tracking and mapping.

The figures 6a-d take up to the representation of figures 1be and indicate a detection of a sub-surface structure 22 at position X by sweeping a scanner 1 over the surface, thereby completely above the object 22, and evaluation the response signal Sr, outputted on display 14. Thereby, the scanner's position is mapped based on SLAM-processing of images taken by the cameras 17. That is, the user explores the sub-surface 22 with the NDT device 1, for instance targeting for an object 11 to be monitored and examination of the sub-surface structure 22 to identify potentially critical areas that must remain unaltered, while capturing and evaluating environmental overground images with the scanner 1.

Now, once the object 22 has been located and segmented within the sensor readings, the geometrical representation of the object 22 is automatically transferred to a memory of the device 1 in connection with its mapped scanning position X. Hence, the information about the detected and measured sub-surface object 22 has been gathered and stored in relation to a map of the environment, e.g. a floor plan.

After the full detection and storage of the hidden object of interest 22 (figures 6a-d), the SLAM-based user guidance functionality can be enabled and subsequently used to guide the user (or another user) back to the sub-surface object 22 for another inspection (indicated in the figures by the curved arrow).

As indicated in figure 6e, based on the stored and mapped object position and the current scanner position, monitored based on positional evaluation of actual camera images, e.g. a video stream, and related to the environmental map, a direction to the object 22 is calculated. The direction is then outputted to the user, e.g. as indicated on display 14 as user guiding arrow 19b.

Guided by the navigational info 19b, the user can approach the surface towards the previously determined object position X, as indicated in figure 6f, and once the object 22 is reached again, another user guiding information in form of a notice is outputted, e.g. a graphical symbol 19d or an acoustic or haptic signal, to inform the user about the approach / arrival to the desired location X of sub-surface structure 22.

The user also sees the scanning signal Sr' of the sub-surface scanner 1 if close enough to the object 22, whereby he does not have to move the scanner 1 completely over the object 22 to have it detected because of the stored position knowledge about it by the previous measurement - in contrast to prior art NDT-devices as exemplified in figures 1a-e, the present NDT-system enables that already the rise of signal Sr' is sufficient to prove the presence of the sub-surface object 22.

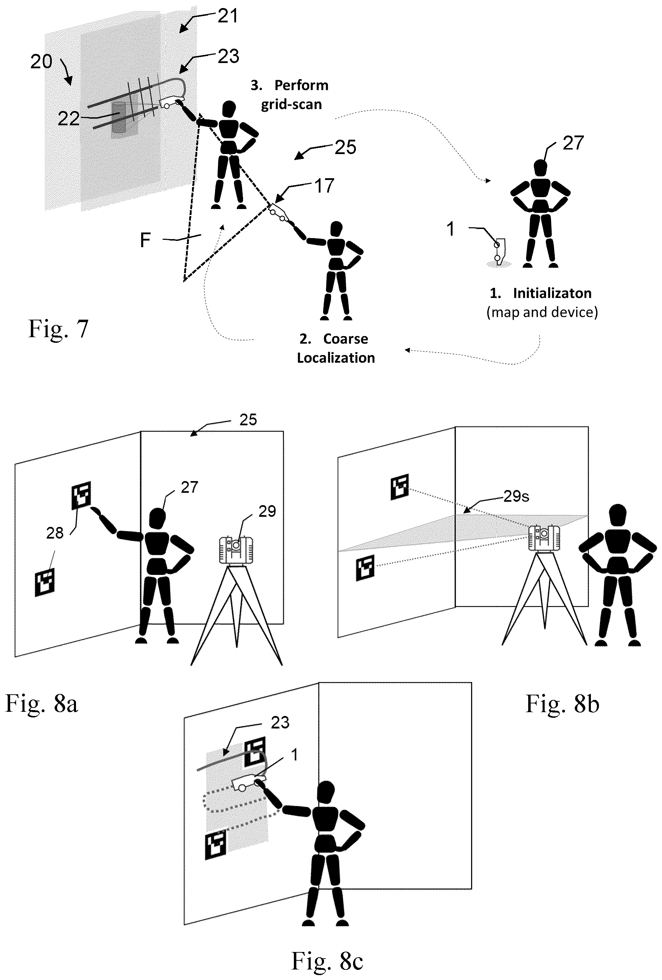

**Fig. 7** schematically depicts another NDT-scan workflow to locate sub-surface objects 22 based on a scanner self-localization, and subsequently measure and analyze data.

The following procedure is in particular advantageous in cases in which a certain area of interest needs to be monitored on a short-time basis. The presented SLAM-based NDT scanner 1 with the ego-localization capability enables the implementation of a guiding mode that allows the user 27 to rapidly (re-)identify the area of interest (localization or re-localization in a preexisting map).

As first step, the user 27 activates an initialization of the scanner 1, as shown on the right of figure 7. The device 1 is set up and stored maps are retrieved, either from an internal storage or from a connected external storage. Also, mapped positions about regions of interest and/or known sub-surface structures 22 can be retrieved automatically or on demand by user 27 in this step or later.

Second, as shown in the middle of the figure, a coarse localization is executed. Thereby, images of the environment such as a room are captured by at least one camera or the like 17 of scanner 1 and based on an evaluation of the images as previously described and on the available environment maps, the current position of the scanner 1 is determined. For or during image capturing, the field of view F of the cameras 17 can be oriented or changed by the user 27 as indicated in the figure, for example the scanner 1 can be swept by the user 27. A position estimation algorithm, executed by the scanner's control and evaluation unit, estimates the pose of the scanner 1 in real time, providing the necessary feedback that leads the operator 27 to the desired scan location within the environment, by user guidance output as in principle already exemplified above, thus guiding the user to surface 21 for searching underground objects 22 of embedding structure 20.

Third, a scan for underground assets is performed in hand-held manner with scanner 1 as indicated on the left of figure 7. This NDT-scan is based on the previous spatial anchoring of the scanner 1 of step 2 and its tracked position. As previously described, a scan trajectory 23 can be monitored by the position tracking of scanner 1, by continuously or repeatedly evaluating the live-images of camera 17 with a SLAM-algorithm as well as live-measurements of other position sensors of scanner 1, as exemplified above, if available. In course of the automatic trajectory surveillance, trigger signals ensuring an apt scan grid can be generated and outputted as well as corresponding user guiding information, as previously described, too.

Thereby, the control and evaluation unit can be configured to compute and output a trigger signal and/or a user guiding information in dependence on a monitored performance status of the scanner 1 and/or accuracy of the tracked scanner position. For instance, in case of low performance or high uncertainty of position tracking (e.g. above or below a predefined threshold), a stop of an automatic triggering can be ordered. Also, one of a last position of accurate measurement can be indicated to the user 27 such that based on such user guidance, the user 27 can reposition the scanner 1 at such location to repeat from there the scan trajectory 23 for successful, reliable measurements.

**Figs. 8a-8c** show another exemplary workflow with a measuring system comprising an NDT-scanner 1 making use of a scanner image-based self-localization capability.

In this example, as shown in figure 8a, the user 28 places fiducial markers 28, e.g. QR-markers, at the surface 21 of the structure to be scanned. Further, the user 28 sets up an external surveying instrument 29 such as a terrestrial laser scanner (TLS) or a total station.

As indicated in figure 8b, subsequently, the environment 25 is scanned by the system's surveying instrument 29 within a scan sphere 29s, thereby also obtaining a digital representation of the markers 28 and hence providing the user 27 with the necessary information to obtain the coordinates of the fiducial markers 28 in the room-scan coordinate system. Hence, using the measuring system, the user 27 scans the area of interest with the scanner 29 and measures and localizes the markers 28 on the map.

As another step, as shown in figure 8c, the user 27 performs an NDT-scan in the desired area as marked by markers 28 with the NDT-scanner 1, e.g. along an NDT-scan trajectory 23 as indicated. In the course of the NDT-scanning, the environment 25 respectively at least the region comprising the markers 28 is imaged by the overview camera of scanner 1. For this reason, the markers 28 are placed such that they are within the field of view defined by the camera rig of the NDT-scanner 1.

The relative transformation between local (NDT-measurement/ NDT-scanner) and reference (environment/room/building) coordinate systems is achieved through the identification of the system's marker(s) 28 in both scans. This workflow is in particular advantageous for situation with short times between reference and NDT scans (few days), given that for instance on construction sites neither the long-term availability of the markers 28 nor the stability of the scene is guaranteed.

Further, when doing multiple NDT-scans in parallel or sequence of the same scene or same ROI/environment 25, a registration of all NDT-scans to the same coordinate system is needed, that is, the referencing of the scan data of all scans to the same reference system.

Here, an automatic or semi-automatic registration algorithm is implemented, in which the registration is performed through the identification of common image features of images taken by a scanner's camera in course of a respective NDT-scan that subsequently reveal revisited areas (spatial anchoring). The registration is done by a system's computational unit, e.g. the control and evaluation unit of the scanner 1 or of the surveying unit 29 or any other connected computer, e.g. a handheld or portable computing device or a cloud computer.

Such approach might show fragility or ambiguities in areas 25 with repetitive patterns, such as office areas or staircases, in which different locations 25 might look alike, making it difficult for the algorithm to re-localize successfully, in particular without ambiguities. In particular under such conditions, the user 27 can be prompted to manually identify common features in the images of both scans. This would be also suitable for registrations with long periods of time between NDT-scans, provided that enough common visual features can be identified.

A skilled person is aware of the fact that details, which are here shown and explained with respect to different embodiments, can also be combined with details from other embodiments and other permutations in sense of the invention.

## Claims

1. A mobile non-destructive testing (NDT) scanner (1) for detecting and measuring of a sub-surface structure (22) of an environment, in particular a ground penetrating radar (GPR) and/or inductive and/or capacitive NDT-scanner, the scanner (1) comprising
• an NDT-sensor (12) designed for sensing the sub-surface structure (22) and generating NDT-sensor signals (Sr, Sr') thereof,
• a control and evaluation unit (16) configured for detection and measurement of the sub-surface structure (22) by evaluation of the NDT-sensor signals (Sr, Sr'),
**characterized in that**
• the scanner (1) comprises at least one optical imaging sensor (17, 17a-c) designed for capturing 2D- and/or 3D-images of the environment when scanning for the sub-surface structure (22), in particular a camera, a time-of-flight camera and/or a LIDAR,
• the control and evaluation unit (16) is configured to track a position of the scanner (1) during a scanning procedure based on an evaluation of 2D- and/or 3D-images of the environment captured by the imaging sensor (17, 17a-c) using a Simultaneous Localization And Mapping (SLAM) algorithm and
• the control and evaluation unit (16) is configured to compute and output a position related trigger signal (36) for triggering the measurement of the sub-surface structure (22) based on the tracked position.

2. A mobile non-destructive testing (NDT) scanner (1) for detecting and measuring of a sub-surface structure (22) of an environment, in particular a ground penetrating radar (GPR) and/or inductive and/or capacitive NDT-scanner, the NDT-scanner (1) comprising
• an NDT-sensor (12) designed for sensing the sub-surface structure and generating NDT-sensor signals (Sr, Sr') thereof,
• a control and evaluation unit (16) configured for detection and measurement of the sub-surface structure (22) by evaluation of the NDT-sensor signals (Sr, Sr'),
**characterized in that**
• the NDT-scanner (1) comprises at least one optical imaging sensor (17, 17a-c) designed for capturing 2D- and/or 3D-images of the environment when scanning for the sub-surface structure (22), in particular a camera, a time-of-flight camera and/or a LIDAR,
• the control and evaluation unit (16) is configured to track a position of the NDT-scanner (1) during a scanning procedure based on an evaluation of 2D- and/or 3D-images of the environment captured by the imaging sensor (17, 17a-c) using a Simultaneous Localization And Mapping (SLAM) algorithm,
• the control and evaluation unit (16) is configured to compute a position-related user-guiding information (19a, b) based on the tracked position and output the user guiding information (19a, b) via a human-machine-interface (14).

3. The NDT-scanner (1) according to claim 2,
**characterized in that**
the control and evaluation unit (16) is configured to
• establish a relation of the current tracked scanner position to a retrieved stored sub-surface structure position, in particular whereby the stored position is a position previously measured,
• compute and output a navigation instruction guiding to the sub-surface structure position as the user guiding information (19a, b).

4. The NDT-scanner (1) according to claim 1,
**characterized in that**
the control and evaluation unit (16) is configured to
• establish a relation of the current tracked scanner position to a retrieved stored sub-surface structure position, in particular whereby the stored position is a position previously measured,
• compute and output the trigger signal (36) in such a way that a further measurement of the sub-surface structure (22) is triggered when approaching it based on the stored sub-surface structure position and the tracked scanner position.

5. The NDT-scanner (1) according to any one of the preceding claims,
**characterized in that**
the control and evaluation unit (16) is configured to compute and output the trigger signal (36) and/or the user guiding information (19a, b) in order to generate a defined scan pattern.

6. The NDT-scanner (1) according to claim 5,
**characterized in that**
the user guiding information (19a, b) comprises at least one of
• a warning in case of a deviation from the defined scan pattern,
• a navigation instruction towards a next scan point and/or starting point of a next scan line, or
• instructions for manually triggering a measurement based on the trigger signal (36).

7. The NDT-scanner (1) according to any one of the preceding claims,
**characterized in that**
the control and evaluation unit (16) is configured to track the scanner position in relation to a map of the environment, whereby the control and evaluation unit (16) is configured to store positions of said sub-surface structure measurements in relation to the map based on the tracked scanner position.

8. The NDT-scanner (1) according to any one of the preceding claims,
**characterized in that**
the NDT-scanner (1) comprises at least one of
• an inertial measurement unit (IMU),
• a magnetic compass,
• a GNSS unit or
• at least one odometer (13r) coupled to at least one wheel (13) of the scanner (1),
and the control and evaluation unit (16) is configured to take measurements of the IMU, magnetic compass, GNSS unit and/or odometer (13r) into account for said position tracking using a SLAM algorithm.

9. The NDT-scanner (1) according to claim 8,
**characterized in that**
the NDT-scanner (1) comprises at least two independent odometers (13r), respectively coupled to two independent wheels (13) or axes, and the control and evaluation unit (16) is configured to consider, disregard or weight measurements of each odometer (13r) for said position tracking independent of another.

10. The NDT-scanner (1) according to any one of the preceding claims,
**characterized in that**
the NDT-scanner (1) comprises at least two imaging sensors (17, 17a-c) with an overlapping and/or connected field of view (F, Fa, Fb).

11. The NDT-scanner (1) according to any one of the preceding claims,
**characterized in that**
the control and evaluation unit (16) is configured to track an orientation of the NDT-scanner (1) during a scanning procedure based on an evaluation of images of the environment captured by the imaging sensor (17, 17a-c) using a Simultaneous Localization And Mapping (SLAM) algorithm.

12. The NDT-scanner (1) according to any one of the preceding claims,
**characterized in that**
the control and evaluation unit (16) is configured to compute and output the trigger signal (36) and/or user guiding information (19a, b) in dependence on a monitored performance status of the NDT-scanner (1) and/or accuracy of the tracked scanner position, in particular to stop triggering and/or indicate a last position of accurate measurement to the user (27).

13. A method for non-destructive testing (NDT) scanning for detecting and measuring of a sub-surface structure (22) of an environment using an NDT-scanner (1), in particular a ground penetrating radar (GPR) and/or inductive and/or capacitive NDT-scanner (1), the method comprising
• executing a scanning movement adjacent to the surface whilst sensing the sub-surface structure (22) with an NDT-sensor of the NDT-scanner (1),
• detecting and measuring the sub-surface structure (22) by automatic evaluation of the NDT-sensor signals (Sr, Sr') of the NDT-sensor (12),
**characterized by**
• tracking a scanning position during the scanning based on an evaluation of 2D- or 3D-images of the environment captured by an imaging sensor (17, 17a-c) of the NDT-scanner (1) using a Simultaneous Localization And Mapping (SLAM) algorithm,
• based on the tracked position, automatically computing and outputting
∘ a position related trigger signal (36) for triggering the measurement of the sub-surface structure (22) and/or
∘ a position related user guiding information (19a, b).

14. The method according to claim 13,
**characterized by**
automatically registering individual scans of the environment, generated by separate scanning procedures, based on
• position tracks of a respective scan mapped in a common map of the environment and/or
• feature extraction and matching of images of the imaging sensor (17, 17a-c) respectively captured in course of the different scans.

15. A computer program product, in particular for the control and evaluation unit (16) according to any of the claims 1 to 12, having computer-executable instructions for performing the automatic execution of the steps of the method according to claims 13 or 14.
